# EUROPEAN PATENT SPECIFICATION

(11) **EP 3 041 795 B1**
(45) Date of publication and mention of the grant of the patent: **18.12.2019**
(21) Application number: 14761354.1
(22) Date of filing: 05.09.2014
(51) Int. Cl.: C02F 1/469, C02F 11/00, B09C 1/08, C02F 101/20, C02F 101/10, C02F 101/22, B09B 5/00

(54) **ELECTRODIALYTIC SEPARATION OF HEAVY METALS FROM PARTICULATE MATERIAL**
ELEKTRODIALYTISCHE TRENNUNG VON SCHWERMETALLEN VON PARTIKELMATERIAL
SÉPARATION ÉLECTRODIALYTIQUE DE MÉTAUX LOURDS À PARTIR DE MATÉRIAU PARTICULAIRE

(30) Priority: 06.09.2013 EP 13183278
(43) Date of publication of application: 13.07.2016
(73) Proprietor: Technical University of Denmark, 2800 Kgs. Lyngby (DK)
(72) Inventor: OTTOSEN, Lisbeth Mølgaard, DK-3400 Hillerød (DK); JENSEN, Pernille Erland, DK-2800 Lyngby (DK); KIRKELUND, Gunvor Marie, DK-2730 Herlev (DK); EBBERS, Benjamin, 5345 AE Oss (NL)
(74) Representative: Høiberg P/S
(86) International application number: PCT/EP2014/068956
(87) International publication number: WO 2015/032903

(56) References cited:
- CA-A- 826 253
- US-A- 3 124 520
- US-A- 5 230 779
- US-A- 5 944 979
- US-A1- 2010 078 389
- OTTOSEN ET AL: "Screening the possibility for removing cadmium and other heavy metals from wastewater sludge and bio-ashes by an electrodialytic method", ELECTROCHIMICA ACTA, ELSEVIER SCIENCE PUBLISHERS, BARKING, GB, vol. 52, no. 10, 13 February 2007 (2007-02-13), pages 3420-3426, XP005886303, ISSN: 0013-4686, DOI: 10.1016/J.ELECTACTA.2006.06.048 cited in the application
- PAZOS M ET AL: "Electrodialytic treatment for metal removal from sewage sludge ash from fluidized bed combustion", JOURNAL OF HAZARDOUS MATERIALS, ELSEVIER, AMSTERDAM, NL, vol. 176, no. 1-3, 15 April 2010 (2010-04-15), pages 1073-1078, XP027105091, ISSN: 0304-3894 [retrieved on 2009-12-03]
- E A Obidiebube ET AL: "Effect of different levels of NPK (15:15:15) on the growth and yield of maize in rainforest agro-ecological zone", International Journal of AgriScience, 31 December 2012 (2012-12-31), pages 1103-1106, XP055150773, Retrieved from the Internet: URL:http://www.inacj.com/attachments/secti on/17/Temp%20December%202012-660%20Akparob i%20F%20%20P%20%281103-1106%29.pdf [retrieved on 2014-11-04]

## Description

### Field of disclosure

The present disclosure relates to a novel process for separation of heavy metals from a suspension comprising heavy metal containing particulate material, in which process the heavy metals are removed by use of the electrodialytic remediation set-up. The novel process of the present disclosure may also be used for recovery of phosphorous in cases where the particulate material also comprises phosphorous in addition to heavy metals. The present disclosure also relates to the electrochemical cell for use in performing the novel process and to the use of the novel process for separation of heavy metals from the heavy metal containing particulate material.

### Background of disclosure

The electrodialytic remediation set-up for use in removal of heavy metals from soil was described for the first time in the International Patent Application No. WO 95/32816. In this set-up a conventional three-compartment electrodialytic cell was used, in which the polluted soil was separated from the electrodes by use of ion exchange membranes. The same set-up has later on also been used for remediation of other polluted materials such as industrial effluent and more recently different fly ashes, waste water sludge, freshwater sediment and harbour sediment, where the polluted materials are suspended in an aqueous media during the remediation process.

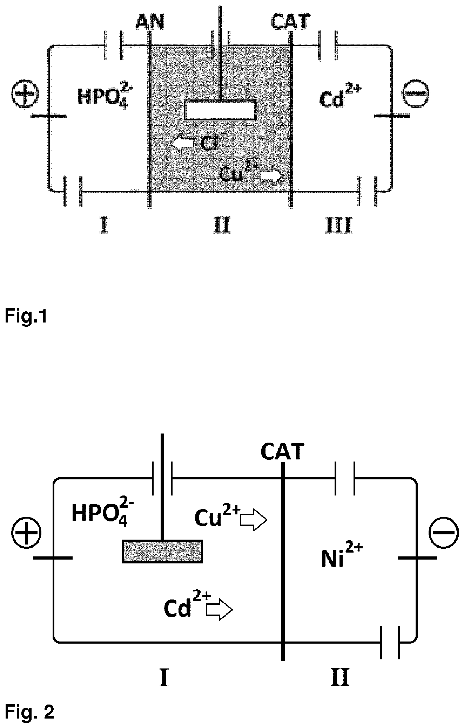

Accordingly, the electrodialytic remediation set-up that has been developed and tested for stirred suspensions consists of a three compartment electrochemical cell as shown in Figure 1. The electrodes are placed in separate compartments (I and III) where electrolyte solutions are circulated. The anode, which is positively charged, is placed in the anode compartment (I) and the cathode, which is negatively charged, is placed in the cathode compartment (III). The electrolyte solution, which is circulated in compartment (I) is designated anolyte, and the electrolyte solution, which is circulated in compartment (III), is designated catholyte. The stirred suspension is located in compartment (II) in the middle. Ion exchange membranes (AN: anionic exchange membrane; CAT cationic exchange membrane) separate the compartments to restrict ion migration so that ions only migrate from the central compartment and into the cathode or anode compartment, respectively.

During the remediation process a direct current, typically in the order of a few mA, is applied to the electrodes. Electrolytic half-reactions at the electrodes (reaction 1 and 2) significantly decrease and increase pH near the anode and cathode, respectively.

| | | |
|---|---|---|
| Cathode: | 4H₂O + 4e⁻ → 2H₂ (g) + 4OH⁻ | (1) |
| Anode: | 2H₂O → O₂ (g) + 4H⁺ + 4e⁻ | (2) |

Ions and ionic complexes from the stirred suspension are transported primarily by electromigration to either the anode or cathode compartment in that positively charged ions or cationic complexes migrate towards the negatively charged cathode and are concentrated in the cathode compartment, where the ions may be collected, whereas the negatively charged ions or anionic complexes, such as phosphate, migrate towards the positively charged anode and are concentrated in the anode compartment.

In principle, heavy metals can be removed from all kinds of heavy metal containing particulate materials by using the electrodialytic remediation concept, such as for example from waste products. Waste products of particular interest are those having a high content of nutrients, because after separation of the heavy metals the remaining of such waste products may be used as agricultural fertilizer or soil conditioner or the like. Such waste products include sewage sludge and sewage sludge ashes. Very interesting waste products are those having a high content of phosphorous, because primary sources of phosphorous are estimated to be depleted within a century and the quality of mined material decreases. Consequently, focus on recycling of phosphorous from secondary sources and low grade quality primary sources becomes increasingly important to sustain future demand in agriculture. These secondary sources, such as municipal wastewater sludge, generally contain both organic and inorganic contaminants, thus limiting its direct application in agriculture. While many of the organic contaminants can be removed through biological or thermal treatment, most of the inorganic contaminants mainly heavy metals remain present in the ash.

Several methods have been investigated in an attempt to successfully separate heavy metals and phosphorous from sewage sludge and sewage sludge ash. These methods include acid treatment ((Oliver and Carey, 1976; Levlin et al. 2003)), thermo (chemical) treatments ((Adam et al, 2009)) and also electrodialytic remediation ((Sturm et al. 2010; Kirkelund et al. 2009)). Room remains for further improvement, particularly in light of phosphorus recovery. For example, Sturm et al. 2010 applied the electrodialytic remediation concept on packed beds of sewage sludge ash in an attempt to recover phosphorous, but recovery rates remained below 1%.

Also de documents US2010/078389 discloses a process for electrodialytic separation of heavy metals.

Pazos M et al, 2010, discloses the use of a process for electrodialiytic separation of heavy metals for obtaining an agricultural product containing phosphorus.

When using the electrodialytic method acidification of the ash suspension may be necessary for mobilization of phosphorus, but will simultaneously also release the heavy metals. The ash suspension in a three compartment set-up can be acidified through water splitting at the anion membrane or migration of H⁺ from either electrode compartment. Under conditions similar to those disclosed in the experiments of this application, these processes can take several days to weeks before having a significant effect on the release of phosphorus, and are therefore considered relatively slow. Suspension of the ash in mineral acid will rapidly increase mobilization of both phosphorus and heavy metals, in particular when using sulfuric acid (H₂SO₄) as opposed to nitric (HNO₃) or phosphoric acid (H₃PO₄) ((Levlin et al. 2003, Oliver and Carey, 1976)).

The inventors of the present disclosure have surprisingly found that if modifications are made to the earlier established electrodialytic cell set-up by reducing the number of compartments from three to two and introducing the anode directly to the suspension of particulate material then an improved remediation method is achieved. This new approach utilizes the acid production by electrolysis at the anode and optionally combines this with acidification of the suspension through mineral acids in order to mobilize phosphorus and heavy metals. Mobilized heavy metal cations and positively charged complexes will migrate from the suspension liquid and concentrate in the cathode compartment, where they may be collected for subsequent depositing or recovery.

### Summary of disclosure

A first aspect according to the present disclosure relates to a process for electrodialytic separation of heavy metals from suspensions of heavy metal containing particulate material. The suspension is introduced in the anode compartment of a two compartment electrochemical cell and when an electric field is applied to the electrochemical cell the heavy metals are removed by migration into the cathode compartment.

A second aspect according to the present disclosure relates to a process for simultaneous electrodialytic separation of heavy metals from particulate material and production of a phosphorous containing agricultural product. In this process the heavy metal containing particles further comprises phosphorous, which dissolves in the anolyte during the process, and is subsequently collected from the anolyte and subjected to a finishing treatment so that the agricultural product is obtained.

A third aspect according to the present disclosure is directed to the agricultural product, which is produced by the electrodialytic process where an electric field is applied to a suspension of heavy metal containing particulate material, which further also comprises phosphorous. During the electrodialytic process phosphorous is dissolved in the anolyte. Subsequently, the phosphorous containing anolyte is subjected to a finishing treatment, whereby the agricultural product is obtained.

A fourth aspect according to the present disclosure relates to the use of the electrodialytic process, where heavy metals are removed from a suspension of heavy metal containing particulate materials by applying an electric field to the suspension.

A fifth aspect according to the present disclosure is directed to the use of the electrodialytic process, where heavy metals and phosphorous are removed from a suspension of heavy metal containing particulate materials said material further comprises phosphorous. During the process the heavy metals are removed by migration into the cathode compartment and the phosphorous is dissolved in the anolyte, collected from the anolyte and optionally further subjected to a finishing treatment, whereby an agricultural product is obtained.

### Description of Drawings

Figure 1 shows the conventional three compartment cell set-up for electrodialytic remediation of a sludge where the electrodes are placed in compartments I and III and the stirred suspension is placed in the middle compartment (II) separated by ion exchange membranes (AN and CAT).
Figure 2 shows the two compartment electrodialytic remediation cell which are used in the novel method according to the present disclosure where the anode is in direct contact with the ash suspension in compartment (I) and the cathode is placed in a separate compartment (II).
Figure 3 shows the results of measured pH in the ash suspension compartment of the two- and the three-compartment cells during the 14 days experiment.
Figure 4 shows the amount of phosphorus (P) mobilized from the ash as percentage of the total initial amount in the ash and the percentage of the mobilized P found in the cathode compartment. For the three compartment cell experiments, the mobile fraction is the sum of the fraction found in anode and middle compartments.
Figure 5 shows the percentage of heavy metal (Cd, Cu, Cr, Ni, Pb and Zn) as mobilized from the ash and found in the cathode compartment, as percentage of the total amount of each heavy metal, and the percentage of the mobilized heavy metal found in the catholyte. For the three compartment cell experiments, the mobile fraction in the middle/anode compartment is the sum of the fraction found in anode and middle compartments

### Detailed description of the disclosure

The present invention is as defined in the claims.

The present disclosure relates to a novel process for electrodialytic separation of heavy metals from a suspension of heavy metal containing particulate material. The novel aspect according to the present disclosure is that the process is performed in a two compartment electrochemical cell comprising a cathode compartment and an anode compartment, where the cathode compartment and the anode compartment are separated by a cation exchange membrane.

The two compartment electrochemical cell is shown in Figure 2. In this set-up an anode is placed in the anode compartment (compartment (I)) and the cathode is placed in the cathode compartment (compartment (II)). The electrolyte solution, which is circulated in the cathode compartment, is designated catholyte and the electrolyte solution circulated in the anode compartment is designated anolyte. The anode compartment and the cathode compartment are separated by a cation exchange membrane (designated CAT in Figure 2). When an electric field is applied to the cell the anode will be positively charged and the cathode will be negatively charged, and cations present as dissolved ions in the anolyte will migrate towards the cathode through the cation exchange membrane and into the cathode compartment, where the cations concentrated. Anions will remain in the anode compartment.

The cation exchange membrane (CAT) is a semipermeable membrane in which an ionic functionality is fixed to the backbone of the membrane. As known to a person skilled in the art, the cation exchange membrane allows the passage of the positive charges (cations) opposite to those on the membrane, while preventing the passage of negative charges (anions). The cations will migrate through the cation exchange membrane and into the catholyte in the cathode compartment, due to the polarity of the electrical current.

During the electrodialytic process, when the electric field is applied, electrolytic half-reactions take place at the electrodes (reaction 1 and 2) resulting in a significantly decrease and increase of pH near the anode and cathode, respectively.

| | | |
|---|---|---|
| Cathode: | 4H₂O + 4e⁻ → 2H₂ (g) + 4OH⁻ | (1) |
| Anode: | 2H₂O → O₂ (g) + 4H⁺ + 4e⁻ | (2) |

In some cases organic pollutants may also be present in the anolyte. In such cases oxidation of said organic pollutants may take place at the surface of the anode. This removal of organic pollutants represents an additional beneficial advantage of the novel process of the present disclosure.

The novel process comprises the steps of:
a) introducing the suspension of heavy metal containing particulate material as the anolyte in the anode compartment,
b) introducing a liquid solution as the catholyte in the cathode compartment, and
c) applying an electric field to the electrochemical cell, whereby dissolved heavy metals are removed from the suspension of particulate material and anolyte in the anode compartment by migration into the catholyte in the cathode compartment.

In some embodiments according to the present disclosure the suspension in the anode compartment is stirred during the process. By the term "stirring" as used herein is meant any kind of movement of the suspension, which may be produced for example by use of mechanical stirring, continuous pumping or gas injection. By including this stirring of the suspension a more efficient process may be obtained by reducing or preventing any sedimentation of the particulate material during the process. Stirring will also improve the rate of contact between the particulate material and the acid formed due to the anode process resulting in faster dissolution of the heavy metals from the particulate material. Moreover, unwanted concentrations gradients that are likely to form in an unstirred suspension will be markedly reduced or prevented if the suspension is subjected to stirring. The stirring velocity has to be sufficient to keep the material fully suspended and is dependent on the liquid to solid ratio and the material density.

In principal any kind of heavy metal containing particulate material can be suspended and subjected to the novel process of the present disclosure. In some embodiments according to the present disclosure the particulate material originates from waste products. Such products often need to be deposit at a secured waste deposit because of the toxic heavy metals. Hence, if the particulate material can be treated so that the heavy metals are removed prior to depositing, then a smaller amount of waste product needs to be deposited. Examples of waste products that can be subjected to the electrodialytic process of the present disclosure include sludge ash, manure ash, soil and soil sludge, municipal solid waste incineration air pollution control residue, harbor sediment, sewage sludge, sewage sludge ash, mine tailings, low quality P-ore, freshwater sediment, slag, bottom ash, fly ash, bioash and industrial/agricultural sludge. In a preferred embodiment according to the present disclosure the heavy metal particulate material is a material selected from the group consisting of sludge ash, manure ash, soil and soil sludge, municipal solid waste incineration air pollution control residue, harbor sediment, sewage sludge and sewage sludge ash. In a particular preferred embodiment according to the present disclosure the heavy metal containing particulate material is sewage sludge ash.

By the term "heavy metal" as used herein is meant any metal that is toxic and thereby dangerous to the health of human beings and animals as well as to the environment. Hence, the term refers to metals that need to be removed from materials before said materials are safe to use as for example agricultural products or the like. Typical examples of heavy metals include Ba, Se, Sb, Mo, Cd, Cr, Cu, Ni, Pb, Zn, Sn, Ta, Nb, Zr and any of the lanthanides. In one embodiment according to the present disclosure examples of heavy metals include Ba, Se, Sb, Mo, Cd, Cr, Cu, Ni, Pb, Zn, and Sn. In one embodiment according to the present disclosure the heavy metals include Cd, Cr, Cu, Pb, Ni and Zn. In a preferred embodiment according to the present disclosure the term "heavy metal" includes metals that upon dissolution form positively charged cations that are capable of migrating into the cathode compartment during the remediation process.

The anolyte comprises the suspension of heavy metal containing particulate material and typically comprises an aqueous solution and may be made of water such as distilled water or tap water. In some embodiments according to the present disclosure the process may become more efficient if the anolyte is made of an organic or a mineral acid, because the heavy metals will then start to dissolve at the point where the suspension is produced due to the acidic conditions. Hence, when the electric field subsequently is applied a larger amount of heavy metal ions are found as dissolved ions in the anolyte and ready to migrate in the electric field. Moreover, at the beginning of the process where the concentration difference of heavy metal ions between the anolyte and the catholyte is high, then some of the heavy metal ions may migrate from the anode compartment and into the cathode compartment by diffusion simply due to the concentration difference, which will also make the process more efficient. Examples of suitable mineral acids that can be used in the process of the present disclosure include sulphuric acid, nitric acid and phosphoric acid. The preferred mineral acid is sulphuric acid. The optimal acid concentration will depend on the kind of particulate material that are suspended and remediated.

The catholyte is typically also made of an aqueous solution. However, the catholyte is a liquid solution without particulate material. The process performs more efficient if ions are present in the catholyte, because a high conductivity in the catholyte will result in lower power consumption. An example of such an aqueous solution is tap water. Another example of such an aqueous solution is a saline solution. Preferably the aqueous solution is a nitrate solution, such as for example a sodium nitrate solution, because any unwanted precipitation of the heavy metal ions in the catholyte is avoided due to the fact that almost all nitrate salts are water soluble. Thus, the catholyte is a liquid solution without particulate material, and preferably comprising ions to facilitate the process.

In some embodiments according to the present disclosure the process further comprises a step of collecting the heavy metals from the catholyte in a form suitable for safe deposit. Such collection could be electrochemical reduction of the heavy metals on the cathode in the cathode compartment, which could take place either during or after completion the electrodialytic process. Alternatively, the collection could be precipitation of the heavy metals to form insoluble salts that would be safe to deposit.

In some embodiments according to the present disclosure the process may further comprise a step of recovering one or more of the heavy metals from the catholyte so that recirculation of said metal is possible. For instance if copper is present in the catholyte this metal ion could easily be electrodeposited on the cathode either during or after completion the electrodialytic process. Subsequently, the deposited copper could be recirculated.

In some embodiments according to the present disclosure the process further comprises a step of separating the anolyte from the particles. This would be beneficial in cases where either the particulate material or the anolyte could be re-used for some beneficial purpose instead of being deposited. For instance it may be that in some cases the particulate material will not be completely free of heavy metals, but could subsequently be disposed of by incorporating the particles into cement or the like. It would also be beneficial in cases where the anolyte needs a further treatment before it can be disposed of, where the particulate matter would complicate this treatment. Examples of separations methods include sedimentation and filtration.

By the term "phosphorous" as used herein is meant any kind of ionic form, which includes elemental phosphorous, such as for example phosphoric acid (H3PO₄), dihydrogen phosphate (H₂PO₄⁻), hydrogen phosphate (HPO₄²⁻), phosphate (PO₄³⁻), phosphorous acid (H3PO₃), dihydrogen phosphonate (H2PO₃⁻), hydrogen phosphonate (HPO₃²⁻), phosphonate (PO₃³⁻) and pyrophosphate (H₂P₂O₅²⁻). A skilled person would know of any similar ionic forms that phosphorous may be able to form.

In particular embodiments according to the present disclosure the heavy metal containing particles further comprises phosphorous, which is dissolved in the anolyte during the process. Recovery of phosphorous from particulate materials is becoming more and more interesting, because primary sources of phosphorous are estimated to be depleted within a century and the quality of mined material decreases. Consequently, focus on recycling of phosphorous from secondary sources becomes increasingly important to sustain future demand in agriculture. These secondary sources, such as municipal wastewater sludge, generally contain both organic and inorganic contaminants, thus limiting its direct application in agriculture.

In a preferred embodiment according to the present disclosure the process further comprises a step of subjecting the phosphorous containing anolyte to a finishing treatment so that an agricultural product is obtained. This finishing treatment will typically include a concentration process step, such as for example chemical precipitation or concentration due to evaporation of the liquid.

The present disclosure also relates to a product produced by the novel process of the present disclosure, where phosphorous from the heavy metal particulate material is converted into an agricultural product by subjecting the phosphorous containing anolyte to a finishing treatment whereby the agricultural product is obtained. A skilled person would know how to convert the anolyte into the agricultural product. A preferred finishing treatment includes chemical precipitation or concentration due to evaporation of the liquid.

At the end of the electrodialytic treatment, the phosphorous is found in solution in the anolyte. A solid phosphorous product can be obtained by different methods such as chemical precipitation or concentration due to evaporation from the anolyte. The product will be characterized by the phosphor concentration level being higher than the phosphor concentration in the suspension of heavy metal containing particulate material, which typically comprises 5-10 wt% phosphor (P). The liquid phosphorous product will after treatment comprise at least 15 wt% phosphor, preferably at least 20 wt% phosphor, and most preferably at least 25 wt% phosphor. Furthermore, the solid phosphorous product will be characterized by the phosphorous being mainly in a water soluble form, and thus plant available, opposed to the less water soluble form in the initial sludge ash and the heavy metal containing particulate material, which is plant unavailable.

The present disclosure also relates to the two compartment electrochemical cell, comprising a cathode compartment and an anode compartment as shown in Figure 2, for use in the novel process according to the present disclosure where the cathode compartment and the anode compartment are separated by a cation exchange membrane. In particular embodiments according to the present disclosure relates to said two compartment electrochemical cell for use in the production of a phosphorous containing agricultural product as described above.

The present disclosure also relates to the use of the novel process according to the present disclosure for separation of heavy metals from a suspension of heavy metal containing particulate material and optionally for production of the phosphorous containing agricultural product.

### Examples

### Example 1. Separation of heavy metals from sewage sludge ash

### Materials and Methods

### Ashes for the experiments

In this study, ash from sewage sludge was investigated. The sewage sludge was incinerated in a fluidized bed combustor in a waste incineration power plant in Avedøre, Denmark.

The concentrations of the heavy metals zinc, cadmium, chromium, nickel and lead found in the Avedøre Ash exceed Danish solid-based limits for application of sewage sludge in agriculture but are compliant with phosphorus critical values ((table 1a)). These standards can be used as a guideline for the application of sewage sludge, and possibly sewage sludge ash, in agriculture. Characteristics of the Avedøre Ash are given in Table 1b.

**Table 1a. Avedøre ash characteristics - phosphorus and heavy metal concentrations compared to Danish sewage sludge regulation limits (in mg or gram per kg dry solid or per kg total phosphorus) for application in agriculture ((Miljøministeriet, 2012)).**

| Component | Dry Weight | | Total Phosphor | | Unit |
|---|---|---|---|---|---|
| | Avedøre Ash | Danish Legislation* | Avedøre Ash | Danish Legislation* | |
| P | 123 ±15 | - | 1000 | - | g/kg |
| Zn | 2.6 ±0.2 | 4.00 | 21 ±8 | - | g/kg |
| Cu | 678 ±18 | 1000 | 5494 ±143 | - | mg/kg |
| Cd | 3.9 ±0.2 | 0.80 | 32 ±2 | 100 | mg/kg |
| Cr | 102 ±2.4 | 100 | 827 ±20 | - | mg/kg |
| Ni | 75 ±2.6 | 30 | 613 ±21 | 2500 | mg/kg |
| Pb | 120 ±14 | 120 | 974 ±111 | 10 000 | mg/kg |

| | | | | | |
|---|---|---|---|---|---|
| *maximum concentration in sewage sludge allowed when applied to a soil ((Miljøministeriet, 2012)). | | | | | |

**Table 1b. Avedøre ash characteristics.**

| | | **Unit** |
|---|---|---|
| pH (H₂O) | 9.1 | - |
| pH (KCl) | 10.8 | - |
| Conductivity | 2.54 | mS/cm |
| Organic Matter | 0.28 | % |
| Solubility | 1.43 | % |

### Analytical Methods

Heavy metal and phosphorus concentrations in the ash were determined according to Danish Standards (DS 259). 20 ml of 1:1 HNO₃ was added to 1 g dry ash and heated at 200 kPa (120 °C) for 30 minutes. The suspension was vacuum filtered through 45 µm filter. The phosphate and heavy metal concentrations were measured in aqueous phase by inductively coupled plasma optical emission spectrometry (ICP-OES). The pH and conductivity of the ash were measured after agitating 2.5 gram of oven dried ash in 12.5 ml 1M KCl and distilled water for 1 hour, respectively. Organic matter content was calculated through loss by ignition after 1 hour at 550°C.

### Electrodialytic Experiments

Electrodialytic experiments with the sewage sludge ash were conducted in laboratory cells with two (2C) and three compartments (3C) as shown in Figure 2 and 1, respectively. The 2C experiment is a modification of earlier 3C experiments for treatment of waste water sludge and bio-ashes ((Ebbers et al. 2012, Jakobsen et al. 2004, Ottosen et al. 2007)). Instead of using a separate cell for the anolyte, the anode was placed directly in the stirred suspension (compartment I).

Compartment I, the anode side of the cell, contained 35 grams of ash, introduced to the cell as suspension with a liquid-to-solid ratio of 10, using either 350 mL distilled water or 0.19 M H₂SO₄. An overhead stirrer was used to maintain the ash in suspension. A cation exchange membrane (designated CAT in figure 1 and 2) was placed between compartment I and II. For the 3C set-up an anion exchange membrane (designated AN in figure 1) was placed between the suspension and the electrolyte solution at the anode end.

**Table 2. The experimental conditions and contents of the ash compartment.**

| Experiment | Ash (gram) | L/S | Suspension Liquid | # of cell compartments | Current (mA) | Duration (days) |
|---|---|---|---|---|---|---|
| 2C-H₂SO₄ | 35 | 10 | 0.19 M H₂SO₄ | 2 | 50 | 3, 7, 14 |
| 2C-DW | 35 | 10 | Distilled water | 2 | 50 | 3, 7, 14 |
| 3C-H₂SO₄ | 35 | 10 | 0.19 M H₂SO₄ | 3 | 50 | 3, 7, 14 |
| 3C-DW | 35 | 10 | Distilled water | 3 | 50 | 3, 7, 14 |

After the experiment, the ash suspension was filtered, oven dried, weighed and crushed manually with a mortar. Concentrations of the heavy metals Cd, Cu, Cr, Pb, Zn and Ni, as well as for phosphorus (P) were measured.

### Results and Discussion

### pH of the ash suspension

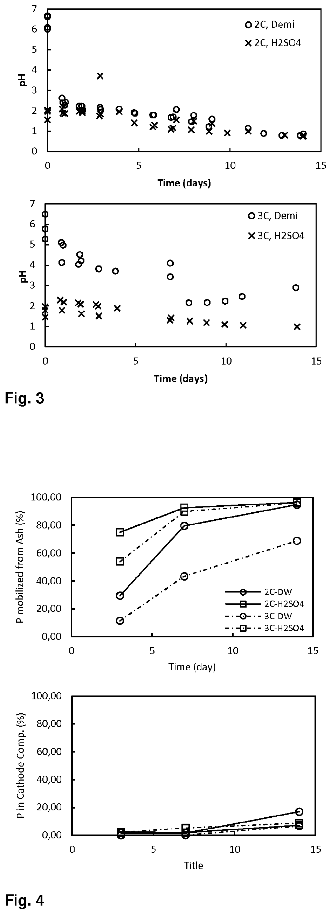

Figure 3 shows the pH changes in the ash suspension during the experiments. In the 2C experiment with distilled water the pH decreases much faster than in the 3C setup. Comparing 2C and 3C experiments with H₂SO₄ pH is little lower in the 2C compartment through the experiments. The lower pH enhances the dissolution of P and heavy metals.

### Mobilization of Phosphorus

Phosphorus mobilization in the two compartment (2C) experiments is faster than in the compartment (3C) experiments. This is especially clear in experiments where distilled water was used as suspension liquid (Figure 4). The same can be observed, although to a smaller degree, for experiments that used 0.19 M H₂SO₄ as suspension liquid. In the 2C-H₂SO₄ experiment, 93% P is released from the ash after only 7 days, increasing to 96% after 14 days, while 80% is released for the 2C-DW experiment after 7 days, reaching 95% after 14 days. Quick release of phosphorus is also observed in the 3C-H₂SO₄ experiment, 90% after 7 days and 96% after 14 days. Phosphorus mobilization in the 3C-DW is significantly slower and after 14 days, only 69% is released from the ash.

Although most phosphorus is mobilized after 14 days, 69% to 96% of the total amount recovered, about 6.5% to 16.9% of it can be found in the cathode compartment (Figure 4). The cation exchange membrane thus prevents most of the phosphorus in migrating to the cathode compartment, i.e. the heavy metals are separated from the phosphorous.

### Mobilization and migration of heavy metals

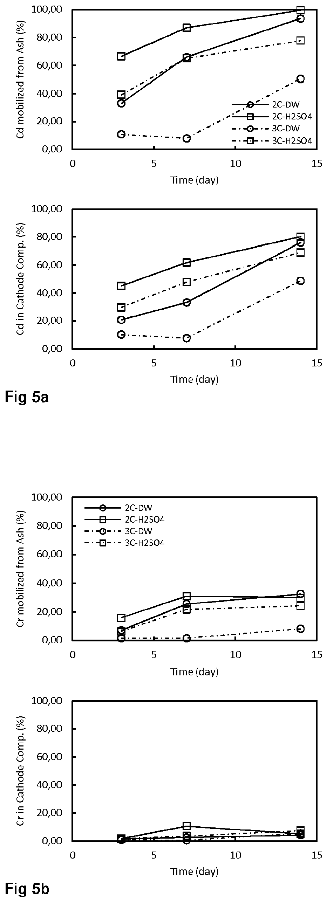

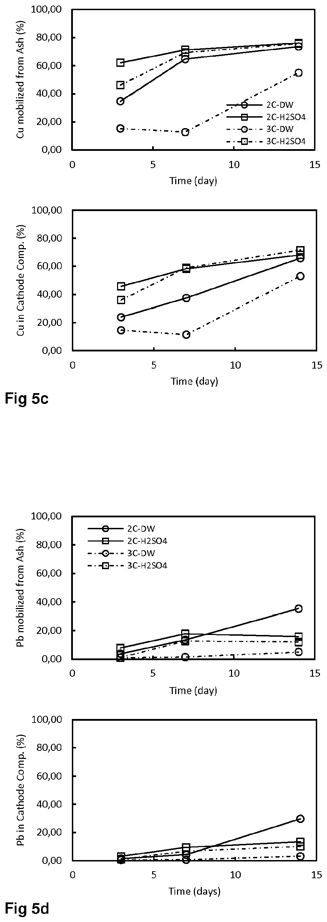

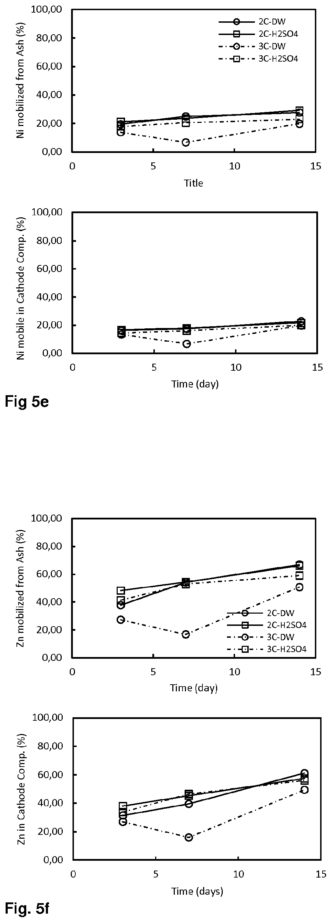

Mobilization of heavy metals, except for Pb, was fastest in the 2C-H₂SO₄ experiment (Figure 5). The difference in release rate at day 3, was most pronounced for metals that released from the ash in relatively large quantities (Cd, Cu and Zn). Release in the 2C- and 3C-H₂SO₄ experiments was significantly greater than release observed in 2C- and 3C-DW experiments. Also, release of heavy metals in the 3C-H₂SO₄ experiment in some cases was equal or higher than 2C-DW. The later stages of the experiments show that continuous release through the half reactions at the anode becomes increasingly important as the release of heavy metals (in particular for Cd and Zn) is higher for 2C-DW than 3C-H₂SO₄. For metals that released slower, such as Cr, Pb and Ni, this difference between acidified and non-acidified sludge was less visible. For these metals, 2C-DW generally shows higher mobilization then 3C-H₂SO₄.

Highest release of heavy metals in these experiment was obtained after 14 days for 2C-H₂SO₄, Cd (99%) > Cu (76%) > Zn (66%) > Cr (30%) > Ni (29%) > Pb (16%). Most of the mobilized heavy metals, except Cr, were successfully separated through EDR and transported into the cathode compartment, in relation to totals: Cd (80%) > Cu (68%) > Zn (57%) > Ni (22%) > Pb (13%) > Cr (5%).

### Conclusion

According to the results of this study, the proposed modification of the three compartment (3C) electrodialysis remediation (EDR) experiments to a two compartment (2C) set-up increases overall efficiency of EDR.

Release of heavy metals and phosphate in 3C experiments depends mostly on water splitting and migration of H⁺ to the suspension compartment. In the 2C experiments, direct acidification of the ash suspension through half-reactions at the anode decreases pH and increases mobilization of both phosphorus and heavy metals significantly. Consequently, for most heavy metals, this also results in higher removal from the suspension liquid and the ash.

A combination of the suspension liquid acidification prior to the experiments and during the experiments through half reactions at the anode in the 2C set-up, make this the most efficient way to mobilize phosphorus and remove most mobilized heavy metals.

### References

Adam C., Vogel C., Wellendorf S., Schick J., Kratz S., Schnug E. (2009). Phoshporous recovery by thermochemical treatment of sewage sludge ash - Results of the European FP6-project SUSAN*.*
Ebbers B., Ottosen L.M., Jensen, P.E., Kirkelund, G.M., (2012). Electrodialytic treatment of sewage sludge for the recovery of phosphorus, conference paper, WasteEng 2012, Portugal.
Jakobsen M.R., Fritt-Rasmussen J., Nielsen S., Ottosen L.M. (2004). Electrodilytic removal of cadmium from wastewater sludge. Journal of Hazardous Materials, 106B, 127-132.
Kirkelund G.M., Ottosen L.M., Villumsen A. (2009). Electrodialytic remediation of harbour sediment in suspension - Evaluation of effects induced by changes in stirring velocity and current density on heavy metal removal and pH. Journal of Hazardous Materials, 169, 685-690.
Levlin E., Löwén M. and Stark K. Phosphorus recovery from sludge incineration ash and Supercritical Water Oxidation residues with use of acids and bases, Report No. 11, Integration and optimization of urban sanitation systems, Wisla Oktober 25-28, 2003.
Oliver, B.G., Carey, J.H. (1976) Acid solubilization of sewage sludge and ash constituents for possible recovery. Water Research, 10, 1077-1081
Ottosen L.M., Pedersen A. J., Hansen H.K., Ribeiro A.B. (2007). Screening the possibility for removing cadmium and other heavy metals from wastewater sludge and bio-ashes by an electrodialytic method.
Sturm G., Weigand H., Marb C., Weiss W., Huwe B. (2010). Electrokinetic phosphorus recovery from packed beds of sewage sludge ash: yield and energy demand.

## Claims

1. A process for electrodialytic separation of heavy metals from a suspension of heavy metal containing particulate material in a two compartment electrochemical cell comprising a cathode compartment and an anode compartment, said cathode compartment and anode compartment being separated by a cation exchange membrane, said method comprising the steps of:
a) introducing the suspension of heavy metal containing particulate material as the anolyte in the anode compartment,
b) introducing a liquid solution without particulate material as the catholyte in the cathode compartment, and
c) applying an electric field to the electrochemical cell, whereby dissolved heavy metals are removed from the suspension of particulate material and anolyte in the anode compartment by migration through the cation exchange membrane and into the catholyte in the cathode compartment.

2. The process according to claim 1, wherein the suspension in the anode compartment is stirred during the process.

3. The process according to any of claims 1 and 2, wherein the heavy metal containing particulate material is selected from the group consisting of sludge ash, manure ash, soil and soil sludge, municipal solid waste incineration air pollution control residue, harbor sediment, sewage sludge and sewage sludge ash.

4. The process according to any of the claims 1-3, wherein the anolyte is an aqueous solution, preferably selected from the group consisting of distilled water, tap water, sulphuric acid, nitric acid and phosphoric acid.

5. The process according to any of the claims 1-4, wherein catholyte is an aqueous solution, such as a saline solution, such as for example a sodium nitrate solution.

6. The process according to any of the claims 1-5, wherein the process further comprises a step of collecting heavy metals from the catholyte in a form suitable for safe deposit.

7. The process according to any of the claims 1-6, wherein the process further comprises a step of recovering one or more of the heavy metals from the catholyte so that recirculation of said metal is possible.

8. The process according to any of the claims 1-7, wherein the process further comprises a step of separating the anolyte from the remaining particles after completion of the electrodialytic process.

9. The process according to any of the claims 1-8, wherein the heavy metal containing particles further comprises phosphorous and where said phosphorous is dissolved in the anolyte during the process.

10. The process according to claim 9, wherein the process further comprises a step of subjecting the phosphorous containing anolyte to a finishing treatment so that an agricultural product is obtained.

11. Use of the process according to any of claims 9-10 for separation of heavy metals from a suspension of heavy metal containing particulate material and for collection of phosphorous and optionally for production of an agricultural product.

## Patentansprüche

1. Verfahren zur elektrodialytischen Trennung von Schwermetallen von einer Suspension aus schwermetallhaltigem Partikelmaterial in einer elektrochemischen Zweikammerzelle, die eine Kathodenkammer und eine Anodenkammer umfasst, wobei die Kathodenkammer und die Anodenkammer durch eine Kationenaustauschmembran getrennt sind, wobei das Verfahren die folgenden Schritte umfasst:
a) Einführen der Suspension aus schwermetallhaltigem Partikelmaterial als den Anolyten in die Anodenkammer,
b) Einführen einer Flüssiglösung ohne Partikelmaterial als den Katholyten in die Kathodenkammer, und
c) Anwenden eines elektrischen Feldes auf die elektrochemische Zelle, wodurch aufgelöste Schwermetalle aus der Suspension aus Partikelmaterial und dem Anolyten in der Anodenkammer durch Migration durch die Kationenaustauschmembran und in den Katholyten in der Kathodenkammer entfernt werden.

2. Verfahren nach Anspruch 1, wobei die Suspension in der Anodenkammer während des Verfahrens gerührt wird.

3. Verfahren nach einem der Ansprüche 1 und 2, wobei das schwermetallhaltige Partikelmaterial aus der Gruppe ausgewählt ist, die aus Schlammasche, Gülleasche, Erde und Erdschlamm, Luftverschmutzungskontrollrückstand durch die Verbrennung von festen Siedlungsabfällen, Hafenablagerungen, Abwasserschlamm und Abwasserschlammasche besteht.

4. Verfahren nach einem der Ansprüche 1-3, wobei der Anolyt eine wässrige Lösung ist, bevorzugt aus der Gruppe ausgewählt, die aus destilliertem Wasser, Leitungswasser, Schwefelsäure, Salpetersäure und Phosphorsäure besteht.

5. Verfahren nach einem der Ansprüche 1-4, wobei der Katholyt eine wässrige Lösung ist, wie zum Beispiel eine Salzlösung, wie zum Beispiel eine Natriumnitratlösung.

6. Verfahren nach einem der Ansprüche 1-5, wobei das Verfahren ferner einen Schritt des Sammelns von Schwermetallen von dem Katholyten in einer Form umfasst, die für sichere Ablagerung geeignet ist.

7. Verfahren nach einem der Ansprüche 1-6, wobei das Verfahren ferner einen Schritt des Rückgewinnens von einem oder mehreren der Schwermetalle von dem Katholyten umfasst, sodass Rezirkulation des Metalls möglich ist.

8. Verfahren nach einem der Ansprüche 1-7, wobei das Verfahren ferner einen Schritt des Trennens des Anolyten von den übrigen Partikeln nach Abschluss des elektrodialytischen Verfahrens umfasst.

9. Verfahren nach einem der Ansprüche 1-8, wobei die schwermetallhaltigen Partikel ferner Phosphor umfassen und wobei der Phosphor während des Verfahrens in dem Anolyten aufgelöst wird.

10. Verfahren nach Anspruch 9, wobei das Verfahren ferner einen Schritt des Aussetzens des phosphorhaltigen Anolyten gegenüber einer Endbearbeitung umfasst, sodass ein landwirtschaftliches Produkt erhalten wird.

11. Anwendung des Verfahrens nach einem der Ansprüche 9-10 zur Trennung von Schwermetallen von einer Suspension aus schwermetallhaltigem Partikelmaterial und zur Sammlung von Phosphor und optional zur Erzeugung eines landwirtschaftlichen Produktes.

## Revendications

1. Procédé pour la séparation électrodialytique de métaux lourds d'une suspension de matériau particulaire contenant des métaux lourds dans une cellule électrochimique à deux compartiments comprenant un compartiment cathode et un compartiment anode, lesdits compartiment cathode et compartiment anode étant séparés par une membrane d'échange de cations, ledit procédé comprenant les étapes de :
a) l'introduction de la suspension de matériau particulaire contenant des métaux lourds en tant qu'anolyte dans le compartiment anode,
b) l'introduction d'une solution liquide sans matériau particulaire en tant que catholyte dans le compartiment cathode, et
c) l'application d'un champ électrique à la cellule électrochimique, moyennant quoi les métaux lourds dissouts sont éliminés de la suspension de matériau particulaire et de l'anolyte dans le compartiment anode par migration à travers la membrane à échange de cations et dans le catholyte dans le compartiment cathode.

2. Procédé selon la revendication 1, dans lequel la suspension dans le compartiment anode est agitée durant le procédé.

3. Procédé selon l'une quelconque des revendications 1 et 2, dans lequel la matériau particulaire contenant des métaux lourds est sélectionné parmi le groupe constitué de cendres de boues, de cendres de fumier, de sol et de boues de sol, de résidus de contrôle de la pollution de l'air suite à l'incinération d'ordures ménagères, de sédiments portuaires, de boues d'épuration et de cendres de boues d'épuration.

4. Procédé selon l'une quelconque des revendications 1 à 3, dans lequel l'anolyte est une solution aqueuse, de préférence sélectionnée parmi le groupe constitué d'eau distillée, d'eau du robinet, d'acide sulfurique, d'acide nitrique et d'acide phosphorique.

5. Procédé selon l'une quelconque des revendications 1 à 4, dans lequel le catholyte est une solution aqueuse, comme une solution saline, comme par exemple une solution de nitrate de sodium.

6. Procédé selon l'une quelconque des revendications 1 à 5, dans lequel le procédé comprend en outre une étape consistant à collecter les métaux lourds depuis le catholyte sous une forme adaptée pour un stockage sans danger.

7. Procédé selon l'une quelconque des revendications 1 à 6, dans lequel le procédé comprend en outre une étape consistant à récupérer un ou plusieurs des métaux lourds depuis le catholyte de sorte que le recyclage dudit métal est possible.

8. Procédé selon l'une quelconque des revendications 1 à 7, dans lequel le procédé comprend en outre une étape consistant à séparer l'anolyte des particules restantes après la réalisation du procédé électrodialytique.

9. Procédé selon l'une quelconque des revendications 1 à 8, dans lequel les particules contenant des métaux lourds comprennent en outre du phosphore, et dans lequel ledit phosphore est dissout dans l'anolyte durant le procédé.

10. Procédé selon la revendication 9, dans lequel le procédé comprend en outre une étape consistant à soumettre l'anolyte contenant le phosphore à un traitement de finition de manière à obtenir un produit agricole.

11. Utilisation du procédé selon l'une quelconque des revendications 9 à 10 pour la séparation de métaux lourds à partir d'une suspension de matériau particulaire contenant des métaux lourds et pour la collection du phosphore et éventuellement la production d'un produit agricole.
